# EUROPEAN PATENT SPECIFICATION

(11) **EP 2 045 167 B1**
(45) Date of publication and mention of the grant of the patent: **04.08.2010**
(21) Application number: 07425615.7
(22) Date of filing: 03.10.2007
(51) Int. Cl.: B62D 5/06, F16L 55/033

(54) **Hydraulically assisted steering system**
Hydraulische Servolenkung
Système à direction assistée hydraulique

(43) Date of publication of application: 08.04.2009
(73) Proprietor: Fiat Group Automobiles S.p.A., 10135 Torino (TO) (IT)
(72) Inventor: Barale, Emanuele, 10135 Torino (IT); Tomatis, Paolo, 10135 Torino (IT); Bonazza, Ruggero, 10135 Torino (IT)
(74) Representative: Quinterno, Giuseppe

(56) References cited:
- EP-A- 1 304 277
- GB-A- 2 051 714
- US-A- 3 894 562
- US-A1- 2001 013 442

## Description

The present invention relates to a hydraulically assisted steering system for a motor vehicle.

More specifically, the subject of the invention is a hydraulically assisted steering system of the type disclosed in document EP 1304277 comprising
a steering box having an input coupling and an outlet coupling for a hydraulic fluid, and
a hydraulic assistance circuit comprising a pump capable of drawing the hydraulic fluid from an associated tank and pumping it through a delivery pipe to the inlet coupling of the steering box, and a return pipe connected between the outlet coupling of the steering box and the tank; the return pipe being provided with a flow restrictor device and the flow restrictor device being located near the outlet coupling of the steering box and having an intermediate restricted passage between end openings.

A typical problem with such steering systems is noise at low frequency caused by the pressure pulsations of the hydraulic fluid in the return pipe.

A common solution to this problem is to use a flow restrictor device inserted in a section of the return pipe. This restrictor has a calibrated restricted passage that tends to create a decoupling between the regions upstream and downstream, obstructing the propagation of pressure pulses.

However, this known solution increases the head losses in the return pipe and increases the temperature of the hydraulic fluid (oil), which, if it exceeds a maximum limit of about 120°C, necessitates the installation of heat exchangers, causing a negative impact both on cost and layout.

If the flow restrictor device is inserted in a section of rubber pipe, this section of the return pipe must be made using a rubber of a higher class than that normally used to enable it to withstand the back pressures generated by the restrictor.

It is an object of the present invention to improve the steering system of the type defined above, particularly as regards the damping of hydraulic fluid pulsations in the return pipe.

These and other objects are achieved according to the invention with a system having the features of claim 1.

From the point of view of construction, the flow restrictor device can be constructed as an independent element mounted in the outlet coupling of the steering box, and connected to one end of the return pipe, or optionally it may also be made integrally inside the outlet coupling of the steering box.

Other features and advantages of the invention will be found in the detailed description given below, purely by way of non-restrictive example, with reference to the appended drawings, in which:
Figure 1 is a partial perspective view of a steering system according to the invention; and
Figure 2 is a partial cross section taken on II-II as marked in Figure 1, and shows an embodiment of a flow restrictor device for a steering system according to the invention.

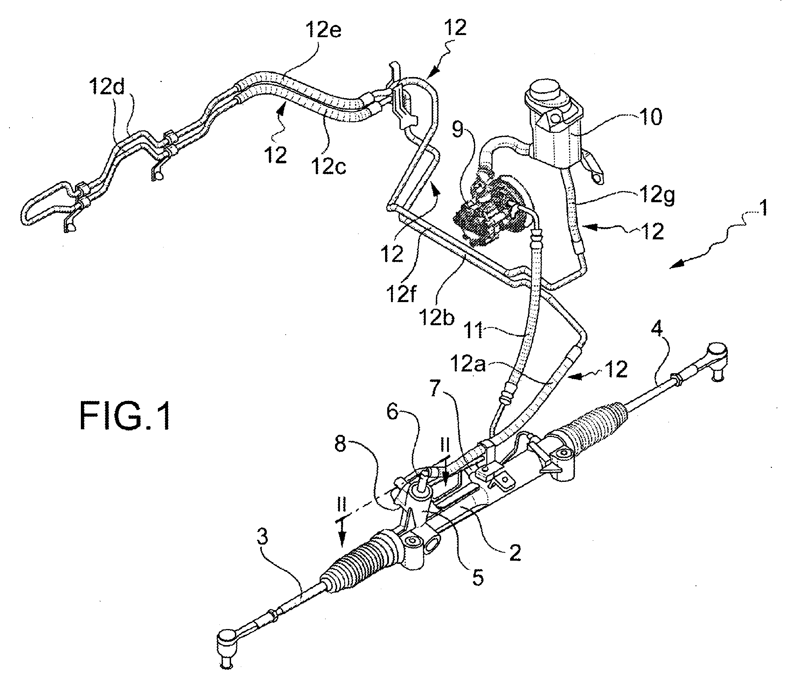

In Figure 1 the number 1 is a general indication for a steering system according to the invention for a motor vehicle. This system is hydraulically assisted and, in a manner known per se, comprises a steering box 2, from whose opposite ends extend tie rods 3 and 4 for connection to corresponding wheels of the motor vehicle.

Also as in the prior art, the steering box 2 comprises a tubular formation 5 in which extends a rotatable control shaft 6 designed to be connected to the steering column (not shown).

The steering box 2 has an inlet coupling 7 and an outlet coupling 8 for a hydraulic fluid.

The steering system 1 also includes a hydraulic assistance circuit comprising a pump 9 (vane-type, for example) capable of drawing the hydraulic fluid from an associated tank 10 and pumping it through a delivery pipe 11 to the inlet coupling 7 of the steering box.

The hydraulic assistance circuit also includes a return pipe bearing the general reference 12, which connects the outlet coupling 8 of the steering box 2 to the tank 10.

In the illustrative embodiment depicted, the return pipe 12 comprises a first section 12a in the form of a hose, a second section 12b in the form of an essentially rigid tube, a third section 12c of hose, a section of rigid tube 12d forming a sort of heat-exchanger coil, a further section of hose 12e, a shaped section of rigid tube 12f, and a final section of hose 12g.

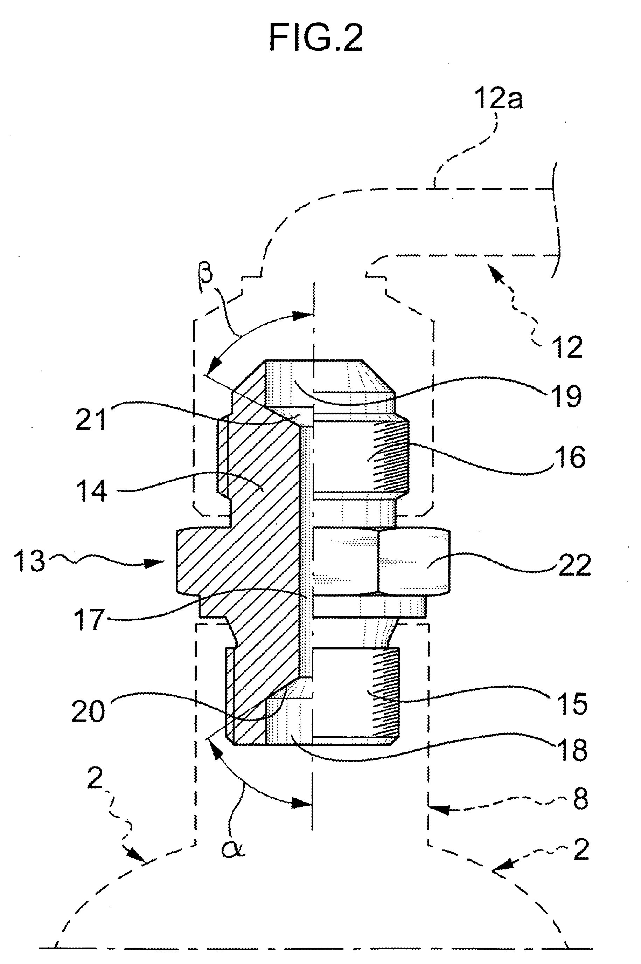

The return pipe 12 is provided with a flow restrictor device, such as that shown by the general reference 13 in Figure 2. According to the invention, this flow restrictor device is located near the outlet coupling 8 of the steering box 2, as shown in Figure 2.

In the illustrative embodiment depicted, the flow restrictor device comprises a body 14 of e.g. metal, generally elongate in form, whose opposite ends have respective threads 15 and 16 for coupling to the outlet coupling 8 of the steering box 2 and to one end of the return pipe 12, respectively.

A restricted axial passage 17 formed inside the body 14 of the device 13 has a diameter of for example approximately 3 mm. This axial passage 17 connects to the opposite end openings 18 and 19 of the body 14, the diameters of which are greatly increased. Advantageously, the coupling between the restricted passage 17 and the end openings 18 and 19 of the body 14 is via surfaces 20 and 21 in the shape of frusta of cones that diverge towards the exterior of the body 14 and that have respective opening angles α and β of for example approximately 60°.

The gradual nature of the transition of the cross section between the end openings and the intermediate restricted passage of the flow restrictor device 13 serves to cut noise levels when operating.

In the embodiment illustrated, in the intermediate part of the body 14 of the device 13, a hexagonal shape 22 is formed to facilitate screwing the restrictor device into position.

The solution represented by the present invention is of low cost and easy to implement. It efficiently damps hydraulic fluid pressure pulsations in the return pipe, reducing vibrations and operational noise, besides vibrations caused by the steering tie rods.

As mentioned earlier, in an alternative embodiment the flow restrictor device 13 may actually be made integral with the outlet coupling 8 of the steering box 2.

Clearly, without departing from the principle of the invention, the embodiments and details of construction may be greatly altered with respect to what has been described above and illustrated purely by way of non-restrictive example without thereby departing from the scope of the invention as defined in the appended claims.

## Claims

1. Hydraulically assisted steering system (1) for a motor vehicle, comprising
a steering box (2) having an input coupling (7) and an outlet coupling (8) for a hydraulic fluid, and
a hydraulic assistance circuit comprising a pump (9) capable of drawing the hydraulic fluid from an associated tank (10) and pumping it through a delivery pipe (11) to the inlet coupling (7) of the steering box (2), and a return pipe (12) connected between the outlet coupling (8) of the steering box (2) and the tank (10); the return pipe (12) being provided with a flow restrictor device (13);
the flow restrictor device (13) being located near the outlet coupling (8) of the steering box (2) and having an intermediate restricted passage (17) between end openings (18, 19), the system being **characterized in that** the flow restrictor device (13) is either mounted directly onto the outlet coupling (8) of the steering box (2) or constructed in one piece with the outlet coupling (8) of the steering box (2), and **in that** said restricted passage (17) is connected to said end openings (18, 19) via connecting passages (20, 21) of progressively varying section, said connecting passages (20, 21) being each essentially in the shape of a frustum of a cone.

2. Steering system according to claim 1, in which said connecting passages (20, 21) have an angle of divergence (α; β) of approximately 60°.

## Patentansprüche

1. Hydraulische Servolenkung (1) für ein Kraftfahrzeug, die umfasst:
ein Lenkgetriebe (2) mit einem Eingangsanschluss (7) und einem Ausgangsanschluss (8) für ein hydraulisches Fluid, und
einen Servokreis, der eine Pumpe (9) aufweist, die dazu fähig ist, das hydraulische Fluid aus einem verbundenen Tank (10) zu ziehen und durch eine Druckleitung (11) zum Eingangsanschluss (7) des Lenkgetriebes (2) zu pumpen, und eine Rücklaufleitung (12), die zwischen dem Ausgangsanschluss (8) des Lenkgetriebes (2) und dem Tank (10) angeschlossen ist, wobei die Rücklaufleitung (12) mit einer Durchllussbegrenzungseinrichtung (13) versehen ist;
wobei die Durchflussbegrenzungseinrichtung (13) nahe dem Ausgangsanschluss (8) des Lenkgetriebes (2) angeordnet ist und einen beschränkten Zwischendurchgang (17) zwischen Endöffnungen (18, 19) aufweist,
wobei die Servolenkung **dadurch gekennzeichnet ist, dass**
die Durchflussbegrenzungseinrichtung (13) entweder direkt an dem Ausgangsanschluss (8) des Lenkgetriebes (2) montiert ist oder in einem Stück mit dem Ausgangsanschluss (8) des Lenkgetriebes (2) konstruiert ist, und dadurch dass der beschränkte Durchgang (17) mit den Endöffnungen (18, 19) über Verbindungsdurchgänge (20, 21) verbunden ist, die einen sich fortschreitend ändernden Querschnitt aufweisen, wobei die Verbindungsdurchgänge (20, 21) im Wesentlichen kegelstumpfförmig sind.

2. Servolenkung nach Anspruch 1, wobei die Verbindungsdurchgänge (20, 21) einen Divergenzwinkel (α; β) von etwa 60° aufweisen.

## Revendications

1. Commande de direction à assistance hydraulique (1) pour un véhicule à moteur, comportant
un boîtier de direction (2) ayant un accouplement d'entrée (7) et un accouplement de sortie (8) pour un fluide hydraulique, et
un circuit d'assistance hydraulique comportant une pompe (9) capable d'aspirer le fluide hydraulique dans un réservoir associé (10) et du pomper à travers un tuyau d'alimentation (11) jusqu'à l'accouplement de sortie (7) du boîtier de direction (2), et un tuyau de retour (12) relié entre l'accouplement de sortie (8) du boîtier de direction (2) et le réservoir (10) ; le tuyau de retour (12) étant pourvu d'un dispositif de limitation d'écoulement (13) ;
le dispositif de limitation d'écoulement (13) étant disposé près de l'accouplement de sortie (8) du boîtier de direction (2) et ayant un passage limité intermédiaire (17) entre des ouvertures d'extrémité (18, 19), le système étant **caractérisé en ce que** le dispositif de limitation d'écoulement (13) est monté directement sur l'accouplement de sortie (8) du boîtier de direction (2) ou bien construit d'une seule pièce avec l'accouplement de sortie (8) du boîtier de direction (2), et **en ce que** ledit passage limité (17) est relié aux dites ouvertures d'extrémité (18, 19) par l'intermédiaire de passages de raccordement (20, 21) de section progressivement variable, lesdits passages de raccordement (20, 21) étant chacun essentiellement sous la forme d'un tronc de cône.

2. Système de direction selon la revendication 1, dans lequel lesdits passages de raccordement (20, 21) ont un angle de divergence (α; β) d'approximativement 60°.
